# DEMANDE DE BREVET EUROPEEN

(11) **EP 0 857 625 A1**
(43) Date de publication de la demande: **12.08.1998**
(21) Numéro de dépôt: 98400269.1
(22) Date de dépôt: 06.02.1998
(51) Int. Cl.: B60R 21/20

(54) **Dispositif de liaison élastique entre un sac gonflable et un volant de direction d'un véhicule automobile**

(30) Priorité: 07.02.1997 FR 9701450
(71) Demandeur: AUTOMOBILES PEUGEOT, 75116 Paris (FR); AUTOMOBILES CITROEN, 92200 Neuilly-sur-Seine (FR)
(72) Inventeur: Spitz, Jean-Marc, 91300 Massy (FR); Boche, René, 92100 Montrouge (FR); Godin, Jean-Philippe, 75017 Paris (FR)
(74) Mandataire: Thinat, Michel

(57) **Abrégé**

La présente invention concerne un dispositif de liaison élastique entre un sac gonflable et un volant de direction d'un véhicule automobile.

Le dispositif est caractérisé en ce qu'il comprend au moins une liaison élastique (6) fixant le sac gonflable (5) au volant de direction (4) et permettant le mouvement de ce sac dans les deux directions orthogonales verticale et transversale du plan perpendiculaire à l'axe du volant de direction (4) de manière à amortir les vibrations de ce volant et à actionner l'avertisseur sonore du véhicule en exerçant sur le sac gonflable un effort suivant l'axe de la colonne de direction (1) du véhicule.

L'invention trouve application dans le domaine de l'automobile.

## Description

La présente invention concerne un dispositif de liaison élastique entre un sac gonflable et un volant de direction d'un véhicule automobile.

On sait que les vibrations ressenties par le conducteur dans le volant de direction de son véhicule déterminent le degré de confort de conduite de ce véhicule et provoquent à la longue une fatigue du conducteur.

Ces vibrations proviennent de différentes sources susceptibles de faire vibrer toute ou partie de l'ensemble constitué par la structure de support de la colonne de direction, la colonne de direction et le volant du véhicule.

Ces sources de vibrations peuvent être dues au profil routier provoquant des vibrations d'une fréquence située dans la gamme de 0 à 50 Hz, aux efforts périodiques générés par les roues du véhicule (par exemple, à cause du balourd des roues) provoquant une fréquence de vibrations située dans la gamme de 0 à 30 Hz et au ralenti et aux acyclismes du moteur du véhicule provoquant une fréquence de vibrations située dans la gamme de 20 à 60 Hz.

Pour éliminer autant que possible les vibrations ressenties dans le volant de direction d'un véhicule, une solution consiste à augmenter les fréquences des modes vibratoires de la colonne de direction afin de placer ces fréquences au maximum en dehors des principales plages d'excitation de celle-ci. Une autre solution consiste à utiliser une masse rajoutée qui est montée élastiquement au centre de la colonne de direction et ajustée à la fréquence du mode de vibration de la colonne. Encore une autre solution utilise le sac gonflable de sécurité prévu en cas de choc frontal et qui est monté élastiquement dans le volant de direction du véhicule pour générer un effet dit "batteur" permettant un amortissement dynamique des vibrations du volant de direction.

Cependant, ces solutions connues cumulent les inconvénients suivants :
- une réalisation coûteuse due à une rigidication difficile (porte à faux important de la masse du volant de direction) ;
- aucune garantie sur l'amplification ou l'augmentation du mode vibratoire (critère uniquement fréquentiel) ;
- une mauvaise maîtrise des vibrations dues à l'acyclisme du moteur (de 30 Hz à 60 Hz) qui excite le mode de vibration de la colonne de direction ;
- l'inconvénient d'un rajout de masse qui doit être suffisamment dimensionnée pour obtenir l'effet souhaité ; et
- l'architecture du sac gonflable monté élastiquement est onéreuse car deux systèmes distincts sont utilisés pour assurer l'effet "batteur" et la fonction d'avertisseur sonore du véhicule, c'est-à-dire qu'il est nécessaire de prévoir un système de plaques et de contre-plaques complexe.

La présente invention a pour but d'éliminer les inconvénients ci-dessus des solutions connues.

A cet effet, l'invention propose un dispositif de liaison élastique entre un sac gonflable et un volant de direction d'un véhicule automobile et qui est caractérisé en ce qu'il comprend au moins une liaison élastique fixant le support du sac gonflable au volant de direction et permettant le mouvement du sac gonflable dans les deux directions orthogonales verticale et transversale du plan perpendiculaire à l'axe du volant de direction de manière à amortir les vibrations du volant de direction et à actionner l'avertisseur sonore du véhicule en exerçant sur le sac gonflable un effort suivant l'axe de la colonne de direction du véhicule.

Avantageusement, la liaison élastique est en un matériau élastomère.

La liaison élastique a une raideur dans l'une des directions précitées verticale ou transversale égale à ou différente de sa raideur dans l'autre direction axiale.

La liaison élastique a une raideur transversale dépendant de l'aire de sa section transversale et une raideur axiale dépendant de son épaisseur.

Selon un mode de réalisation, la liaison élastique est en forme de plot fixé entre le support du sac gonflable et une partie solidaire du volant.

Selon un autre mode de réalisation, la liaison élastique est en forme de manchon fixé entre le support du sac gonflable et une partie solidaire du volant par un élément formant rivet.

Selon une variante, la liaison élastique présente une forme générale cylindrique à section transversale elliptique.

De préférence, le dispositif de liaison comprend quatre liaisons élastiques fixant le support du sac gonflable au volant de direction.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :

La figure 1 représente schématiquement le dispositif de l'invention permettant une liaison élastique entre un sac gonflable et un volant de direction d'un véhicule automobile.

La figure 2 représente schématiquement un système où le sac gonflable et le volant de direction sont liés rigidement pour comprendre le comportement vibratoire de ce système.

La figure 3 représente un système semblable à celui de la figure 2 mais selon lequel le sac gonflable est relié au volant de direction par le dispositif de liaison élastique conforme à l'invention.

Les figures 4 et 5 sont des vues schématiques permettant d'expliquer le principe de fonctionnement du dispositif de liaison élastique de l'invention pour mettre en service l'avertisseur sonore.

La figure 6 est un graphique représentant des courbes de réponse vibratoires du système de la figure 2 et du système de l'invention de la figure 3.

La figure 7 est une vue détaillée arrière suivant la flèche VII de la figure 1.

La figure 8 est une vue en coupe partielle suivant la ligne VIII-VIII de la figure 7 et montrant une liaison élastique de l'invention en position d'ouverture de contacts de mise en service d'un avertisseur sonore du véhicule.

La figure 9 est une vue de la liaison élastique de la figure 8 comprimée axialement pour amener en contact les contacts électriques de mise en service de l'avertisseur sonore.

La figure 10 est une vue de la liaison élastique de la figure 8.

La figure 11 est une vue de dessus d'une liaison élastique de forme générale cylindrique à section transversale elliptique.

La figure 12 est une vue en coupe semblable à celle de la figure 8 et représentant une variante de réalisation de la liaison élastique entre le sac gonflable et le volant de direction.

La figure 13 représente la liaison élastique de la figure 12 comprimée élastiquement dans le sens axial pour amener en contact électrique les contacts de mise en service de l'avertisseur sonore du véhicule.

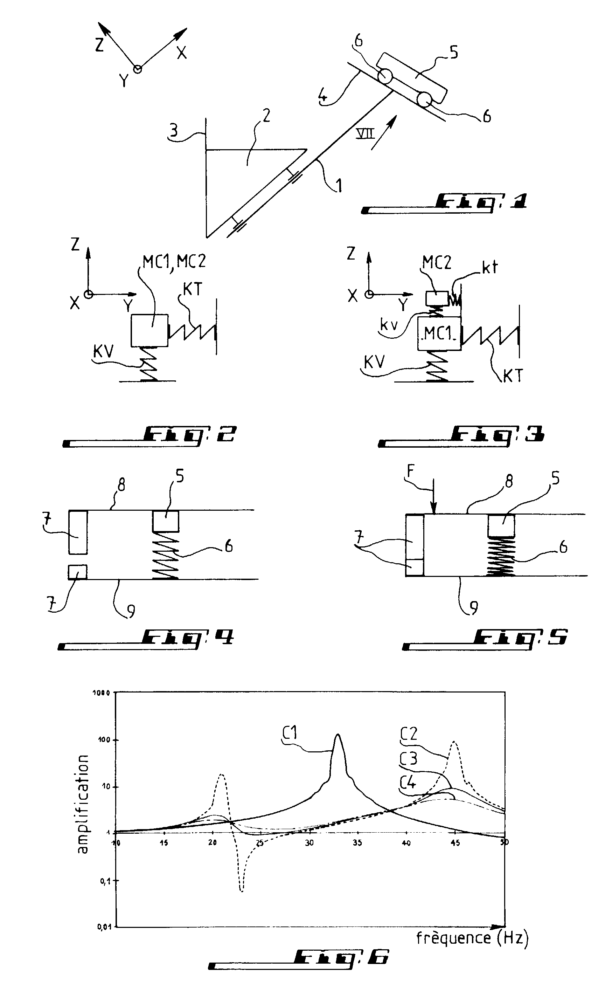

En se reportant à la figure 1, la référence 1 désigne une colonne de direction d'un véhicule automobile montée à rotation à une structure de support 2 solidaire de la caisse 3 du véhicule.

La colonne de direction 1 porte à son extrémité supérieure un volant de direction 4 sur lequel est monté le sac gonflable 5 permettant de protéger le conducteur du véhicule lors d'une collision frontale.

Selon l'invention, le sac gonflable 5 est assemblé au volant de direction 4 par au moins une liaison élastique 6, de préférence au nombre de quatre comme le verra ultérieurement, et permettant d'assurer à la fois l'effet "batteur" permettant l'amortissement dynamique des vibrations propagées au volant de direction 4 et la fonction d'avertisseur sonore.

Comme on le sait déjà, deux modes vibratoires principaux pénalisent le confort de conduite du véhicule et comprennent respectivement un mode vibratoire "vertical" dans le plan XOZ du véhicule comme représenté en figure 1 et un mode vibratoire "transversal" suivant la direction Y du véhicule.

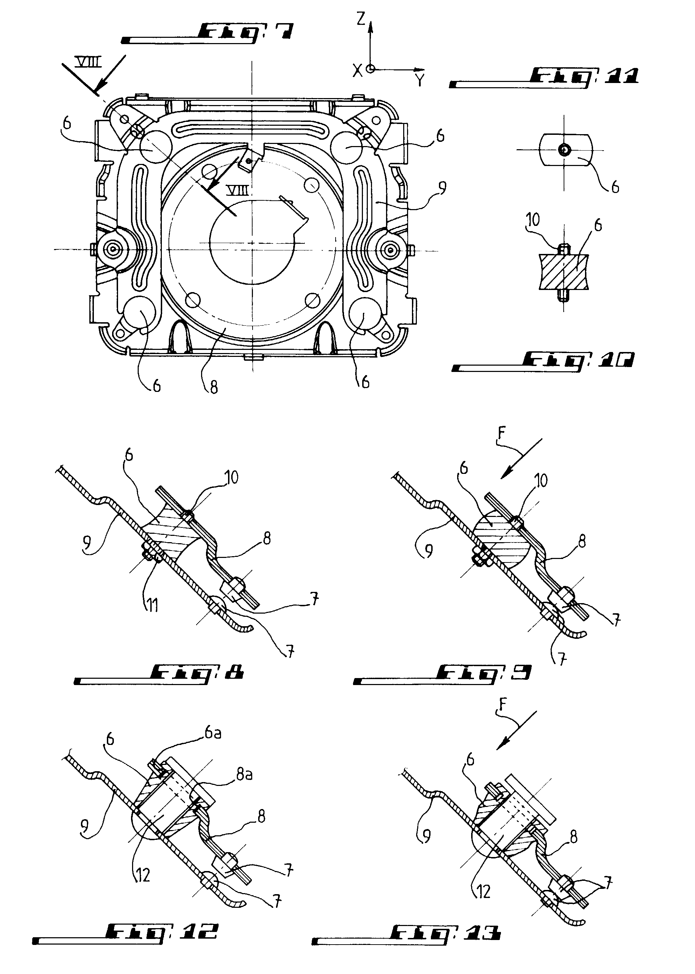

Le comportement vibratoire de l'ensemble décrit en référence en figure 1 où le sac gonflable 5 et le volant de direction 4 seraient liés rigidement peut se réduire au système représenté en figure 2. Ainsi, ce système se décompose en un mode vibratoire transversal ω² = KT/(Mc1 + Mc2) et un mode vibratoire vertical ω² = KV/(Mc1 + Mc2), où KT exprime la raideur transversale suivant l'axe Y de la liaison rigide de l'ensemble volant de direction et sac gonflable, KV exprime la raideur verticale suivant le plan XOZ de la liaison de l'ensemble volant de direction et sac gonflable, Mc1 est le volant de direction 4 et Mc2 est le sac gonflable 5.

Le comportement vibratoire de l'ensemble du dispositif de l'invention décrit à la figure 1 peut se réduire au système représenté en figure 3. Dans ce cas, par rapport à la figure 2, le sac gonflable Mc2 référencé en 5 en figure 1 est relié au volant Mc1 référencé en 4 en figure 1 avec une liaison élastique de raideur Kv en vertical et une raideur Kt en transversal.

Ainsi, le dispositif de liaison de la figure 1 utilise au moins une liaison élastique 6 fixant le sac gonflable 5 au volant de direction 4 permettant le mouvement du sac gonflable 4 dans les deux directions orthogonales OY et OZ du plan perpendiculaire à l'axe du volant de direction 4 de manière à amortir les vibrations du volant de direction et à actionner l'avertisseur sonore du véhicule en exerçant sur le sac gonflable 5 un effort suivant l'axe de la colonne de direction du véhicule. Plus précisément, l'effet "batteur" pour l'amortissement dynamique des vibrations est obtenu avec les raideurs transversale et verticale de chaque liaison élastique 6 et l'avertisseur sonore peut être mis en service du fait que la liaison élastique a une raideur axiale lui permettant d'être comprimée élastiquement pour effectuer un contact électrique entre plots de contact de mise en service de cet avertisseur. Les figures 4 et 5 montrent schématiquement ces deux plots de contact 7 solidaires respectivement du support 8 du sac gonflable 5 et d'une partie 9 du volant 4 avec une liaison élastique 6 assemblant le sac gonflable 5 au volant de direction 4. La figure 4 montre les plots 7 en position ouverte à laquelle l'avertisseur sonore n'est pas mis en service. La mise en service de cet avertisseur est obtenue en exerçant sur le sac gonflable 5 un effort F suivant l'axe de la colonne de direction 1 du véhicule de manière à comprimer la liaison élastique 6 suivant la direction axiale de celle-ci de manière à amener en contact électrique les deux plots 7 et alimenter électriquement l'avertisseur sonore. Lorsque l'effort F est relâché, le rappel du sac gonflable 5 dans sa position initiale est assuré par la raideur axiale de chaque liaison élastique 6.

La figure 6 représente en C1 une courbe de réponse vibratoire du système initial de la figure 2 qui montre la présence de vibrations du volant de direction du véhicule dans la gamme de 20 à 45 Hz. Les courbes de réponse vibratoires C2, C3 et C4 du système de l'invention tel que réduit en figure 3 montrent que l'amplification du mode vibratoire est très sensiblement diminuée et que le système peut être réglé pour obtenir ces trois courbes différentes pour privilégier une plage fréquentielle précise, par exemple celle du ralenti du moteur du véhicule. Une plage fréquentielle peut être privilégiée pour la réponse vibratoire du volant dans la direction des axes Y et Z en y plaçant l'anti-résonance du système, qui correspond à la fréquence de résonance du sac gonflable sur le marbre. Une adaptation des rigidités des liaisons élastiques 6 suivant les directions Y et Z par modification de la forme et de la largeur de chacune de ces liaisons permet de diminuer la réponse vibratoire du volant dans les directions Y et Z. L'amplitude des modes vibratoires du volant de direction peut être également maîtrisée en choisissant le matériau constituant chaque liaison élastique et qui peut être une matière élastomère.

Les figures 7 à 10 représentent un mode de réalisation de chaque liaison élastique 6 fixant le sac gonflable 5 au volant de direction 4.

Ces figures représentent en 9 la partie solidaire du volant de direction 4 à laquelle est fixé le support 8 du sac gonflable 5 par l'intermédiaire de liaisons élastiques 6 au nombre de quatre. Chaque liaison élastique 6 présente la forme d'un plot par exemple sensiblement en diabolo, de préférence en matière élastomère, traversé par une tige filetée 10 coaxiale au plot et dont une extrémité est fixée dans un trou taraudé correspondant du support 8 et l'autre extrémité est ancrée à la partie 9 du volant par un écrou 11 en appui sur une face plane de la partie 9 opposée au support 8. La figure 8 représente un plot 6 dont la raideur axiale maintient le sac gonflable 5 en position initiale avec les plots de contact électrique 7 espacés de sorte que l'avertisseur sonore du véhicule n'est pas alimenté électriquement. En exerçant un effort suivant la flèche F comme représenté en figure 9, c'est-à-dire dans la direction axiale du plot 6, celui-ci est comprimé sur une distance permettant d'amener en contact électrique les deux plots 7 et d'alimenter électriquement l'avertisseur sonore. Bien entendu, les plots élastiques 6, en plus de la fonction de l'avertisseur sonore, permettent également de diminuer la réponse vibratoire du volant de direction dans les directions Y et Z par le choix des raideurs suivant ces directions, raideurs qui peuvent être identiques ou différentes en choisissant la largeur suivant ces directions Y et Z. L'épaisseur de chaque plot étant prédéterminée par l'agréement de la fonction avertisseur sonore, la raideur sera déterminée par le matériau de ce plot. La variation des caractéristiques de raideur verticales et transversales des plots élastiques 6 peut être également obtenue suivant la grandeur de l'aire en section transversale de chaque plot élastique 6 dans ses deux directions principales de cette section. La figure 11 montre un exemple d'un plot 6 présentant une forme générale cylindrique à section transversale approximativement elliptique de dimensions choisies en fonction des raideurs verticales ou transversales souhaitées du plot.

Les figures 12 et 13 représentent un autre mode de réalisation d'une liaison élastique entre le volant de direction 4 et le sac gonflable 5. Selon ce mode de réalisation, chaque élément élastique 6 est constitué par un manchon sensiblement tronconique 6 interposé entre la partie 9 du volant et le support 8 du sac gonflable. Le manchon 6 comporte une gorge circulaire 6a dans laquelle s'engage une portion périphérique interne circulaire définissant un perçage 8a du support 8 et un élément formant rivet 12 traverse le manchon 6, le support 8 et la partie 9 pour fixer celui-ci entre le support 8 et la partie 9. La figure 12 montre les plots de contact électrique 7 qui sont séparés de sorte que l'avertisseur sonore n'est pas alimenté électriquement tandis que la figure 13 montre l'alimentation électrique de cet avertisseur en exerçant un effort suivant la flèche F suffisant pour comprimer le manchon 6 dans le sens axial et amener en contact électrique les deux plots de contact 7. Une fois cet effort relâché, le rappel du sac gonflable dans sa position initiale est assuré par la raideur axiale du manchon 6.

L'invention, en utilisant des liaisons élastiques à raideurs différentes suivant leurs trois axes, permet l'amortissement dynamique des vibrations par production de l'effet "batteur" obtenu avec les raideurs verticales ou transversales des liaisons élastiques et l'usage de l'avertisseur sonore du véhicule en comprimant axialement les liaisons élastiques dont la raideur axiale rappelle le sac gonflable dans sa position intiale.

Le dispositif conforme à l'invention possède ainsi les avantages suivants :
- un gain économique sur la réalisation de la liaison entre le sac gonflable et le volant de direction puisqu'une même liaison élastique cumule les deux fonctions de "batteur" et avertisseur sonore ;
- aucune masse non fonctionnelle n'est rajoutée et la masse du sac gonflable, d'environ 1 kg, est suffisamment dimensionnée pour amortir correctement les vibrations ;
- l'amplification du mode vibratoire est très sensiblement diminuée et un réglage approprié des valeurs des raideurs transversale et verticale et axiale des liaisons élastiques permet de privilégier une bande fréquentielle précise, par exemple celle du ralenti du moteur du véhicule.

## Revendications

1. Dispositif de liaison élastique entre un sac gonflable (5) et un volant de direction (4) d'un véhicule automobile, caractérisé en ce qu'il comprend au moins une liaison élastique (6) fixant le support (8) du sac gonflable (5) au volant de direction (4) et permettant le mouvement du sac gonflable (5) dans les deux directions orthogonales verticale et transversale du plan perpendiculaire à l'axe du volant de direction (4) de manière à amortir les vibrations du volant de direction (4) et à actionner l'avertisseur sonore du véhicule en exerçant sur le sac gonflable (5) un effort suivant l'axe de la colonne de direction (1) du véhicule.

2. Dispositif selon la revendication 1, caractérisé en ce que la liaison élastique (6) est en un matériau élastomère.

3. Dispositif selon la revendication 1 ou 2, caractérisé en ce que la liaison élastique (6) a une raideur dans l'une des directions précitées verticale ou transversale égale à ou différente de sa raideur dans l'autre direction axiale.

4. Dispositif selon la revendication 3, caractérisé en ce que la liaison élastique (6) a une raideur transversale ou verticale dépendant de l'aire de sa section transversale et une raideur axiale dépendant de son épaisseur.

5. Dispositif selon l'une des revendications précédentes, caractérisé en ce que la liaison élastique (6) est en forme de plot fixé entre le support (8) du sac gonflable (5) et une partie (9) solidaire du volant (4).

6. Dispositif selon l'une des revendications 1 à 4, caractérisé en ce que la liaison élastique (6) est en forme de manchon fixé entre le support (8) du sac gonflable (5) et une partie (9) solidaire du volant (4) par un élément formant rivet (12).

7. Dispositif selon l'une des revendications précédentes, caractérisé en ce que la liaison élastique (6) présente une forme générale cylindrique à section transversale approximativement elliptique.

8. Dispositif selon l'une des revendications précédentes, caractérisé en ce qu'il comprend quatre liaisons élastiques (6) fixant le support (8) du sac gonflable (5) au volant de direction (4).
